(19) Europäisches Patentamt
European Patent Office
Office européen des brevets

(11) **EP 3 147 583 B1**

(12) **EUROPEAN PATENT SPECIFICATION**

(45) Date of publication and mention
of the grant of the patent:
**13.03.2019 Bulletin 2019/11**

(21) Application number: **14892601.7**

(22) Date of filing: **23.05.2014**

(51) Int Cl.:
*F24H 1/18* (2006.01)     *F24D 17/00* (2006.01)
*F24D 17/02* (2006.01)     *F24D 19/10* (2006.01)

(86) International application number:
**PCT/JP2014/063725**

(87) International publication number:
**WO 2015/177929 (26.11.2015 Gazette 2015/47)**

(54) **STORAGE WATER HEATER**

HEISSWASSERSPEICHER

CHAUFFE-EAU À STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2017 Bulletin 2017/13**

(73) Proprietor: **Mitsubishi Electric Corporation
Chiyoda-ku
Tokyo 100-8310 (JP)**

(72) Inventors:
  • **SHIBAZAKI, Naoki
    Tokyo 100-8310 (JP)**
  • **SAKUMA, Toshiyuki
    Tokyo 100-8310 (JP)**

  • **WATANABE, Naoki
    Tokyo 100-8310 (JP)**
  • **KURITA, Satoshi
    Tokyo 100-8310 (JP)**

(74) Representative: **Pfenning, Meinig & Partner mbB
Patent- und Rechtsanwälte
Theresienhöhe 11a
80339 München (DE)**

(56) References cited:
**EP-A1- 1 342 957        JP-A- 2002 122 352
JP-A- 2004 245 463     JP-A- 2004 245 463
JP-A- 2009 103 444     JP-A- 2011 064 398**

## Description

### Technical Field

The present invention relates to a storage water heater that heats supply water using hot water stored in a hot water storage tank as a heat source and thereby supplies hot water.

### Background Art

Conventionally, for example, PTL 1 discloses a water heater in which a fluid stored in a hot water storage tank is heated, the fluid is circulated and fed to a heat exchanger and water is thereby heated. Also, in this water heater, a drive power of a pump is controlled according to a difference between a temperature of hot water on the hot water supply side, which flows out from the heat exchanger, and a set hot water supply temperature, to increase/decrease a circulation flow rate of the fluid. PTL 2 discloses a water heater showing a small fluctuation of temperature of discharged hot water in an initial stage of starting discharging hot water supply at the time of an intermittent use and an initial stage of starting discharging hot water supply after a long unused time. PTL 2 discloses the preamble of claim 1.

### Citation List

### Patent Literature

[PTL 1] JP 5-99507 A
[PTL 2] JP 2002 122352 A

## Summary of Invention

### Technical Problem

However, in flow rate control in the water heater according to PTL 1 mentioned above, no special control relating to a control interval is performed. Thus, in the water heater according to PTL 1, if the control interval is long, a hot water supply temperature may largely deviate from a target temperature when a hot water supply-side flow rate rapidly fluctuates, which may give a feeling of discomfort to a user. On the other hand, if the control interval is short, unnecessary fluctuation in hot water supply temperature, what is called hunting, may occur when the hot water supply-side flow rate is stable. As mentioned above, the conventional technique has room for improvement in ensuring hot water supply temperature stability.

The present invention has been made in order to solve the aforementioned problems, and an object of the present invention is to provide a storage water heater capable of ensuring hot water supply temperature stability even if there is fluctuation in hot water supply-side flow rate.

### Solution to Problem

A storage water heater according to the present invention is described in claim 1. In particular, it includes: a hot water storage tank that stores hot water; heating means for heating hot water stored in the hot water storage tank; a hot water supply heat exchanger for performing heat exchange between hot water supplied from an upper portion of the hot water storage tank and supply water; a supply water conduit that guides the supply water to a hot water supply terminal via the hot water supply heat exchanger; a hot water supply heat source conduit that guides water from the upper portion of the hot water storage tank to a lower portion of the hot water storage tank via the hot water supply heat exchanger; a hot water supply heat source pump that circulates water in the hot water supply heat source conduit; and pump control means for, in a hot water supply operation of supplying hot water to the hot water supply terminal, calculating an output of the hot water supply heat source pump, the output bringing a heat source-side flow rate that is a flow rate of hot water flowing in the hot water supply heat source conduit to a target flow rate calculated based on a hot water supply-side flow rate that is a flow rate of hot water flowing in the supply water conduit, for each control interval and controlling the hot water supply heat source pump based on the calculated output, and the pump control means includes control interval changing means for changing the control interval based on an absolute value of an amount of temporal change in the hot water supply-side flow rate.

**Advantageous Effects of Invention**

The storage water heater according to the present invention enables provision of a storage water heater capable of ensuring hot water temperature stability even if there is fluctuation in hot water supply-side flow rate.

**Brief Description of Drawings**

Fig. 1 is a configuration diagram illustrating a storage water heater according to Embodiment 1 of the present invention.

Fig. 2 is a circuit configuration diagram of the storage water heater according to Embodiment 1 of the present invention in a heating-up operation.

Fig. 3 is a circuit configuration diagram illustrating the storage water heater according to Embodiment 1 of the present invention in a hot water supply operation.

Fig. 4 is a graph indicating variation of a hot water supply-side flow rate Fk relative to passage of time in the storage water heater according to Embodiment 1 of the present invention.

Fig. 5 is a flowchart of a routine for a control section to set a control interval $\Delta Tc$ in Embodiment 1 of the present invention.

Fig. 6 is a flowchart of a routine for the control section to perform control of a heat source-side flow rate in Embodiment 1 of the present invention.

Fig. 7 is a flowchart of a routine for a control section to perform control of a heat source-side flow rate in Embodiment 2 of the present invention.

**Description of Embodiments**

Embodiments of the present invention will be described below with reference to the drawings. Elements that are common to the drawings are provided with a same reference numeral, and overlapping descriptions thereof will be omitted.

Embodiment 1

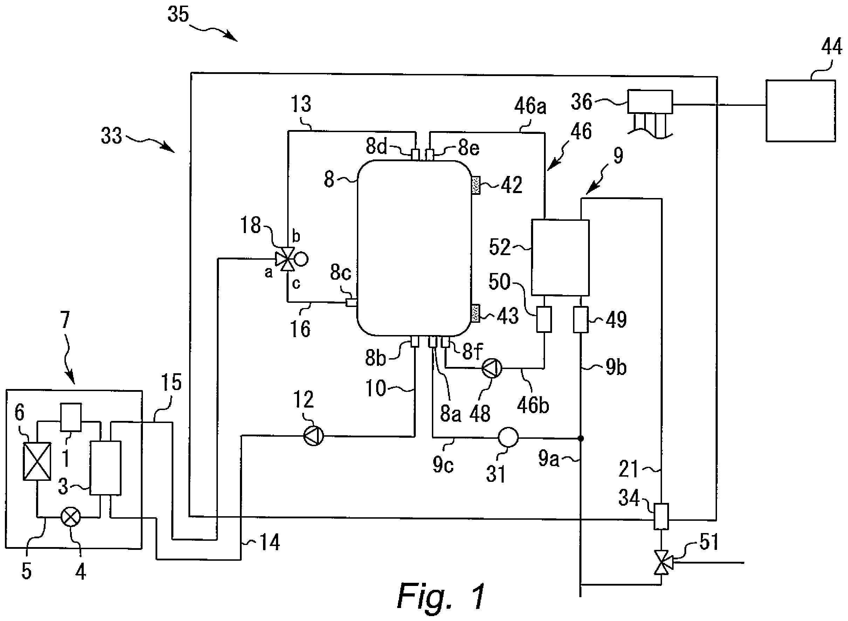

Fig. 1 is a configuration diagram illustrating a storage water heater according to Embodiment 1 of the present invention. A storage water heater 35 includes a tank unit 33, an HP unit 7 using a heat pump cycle, and a remote controller 44 for providing an operational instruction and performing an operation to change a set value. The HP unit 7 and the tank unit 33 are connected via an HP going piping 14, an HP return piping 15 and a non-illustrated electric wiring. The tank unit 33 incorporates a control section 36 therein. Operations of various valves, pumps and the like included in the tank unit 33 and the HP unit 7 are controlled by the control section 36 electrically connected thereto. The control section 36 and the remote controller 44 are connected so as to be mutually communicable. The remote controller 44 is equipped with, e.g., a display section that displays information such as a status of the storage water heater 35, an operation section including, e.g., switches to be operated by a user, a speaker and a microphone, which are not illustrated.

The HP unit 7 functions as heating means for heating low-temperature water guided out of a hot water storage tank 8 included in the tank unit 33. In the HP unit 7, a compressor 1, a water-refrigerant heat exchanger 3, an expansion valve 4 and an air heat exchanger 6 are connected in a looped manner via a refrigerant piping 5, thereby forming a heat pump cycle. The water-refrigerant heat exchanger 3 is intended to perform heat exchange between a refrigerant flowing in the refrigerant piping 5 and low-temperature water guided from the tank unit 33.

The tank unit 33 incorporates the following pipings and various components therein. The hot water storage tank 8 is intended to store water. Supply water supplied from a water source such as a water tap is introduced into the tank unit 33 through a first supply water piping 9a. A water inlet 8a provided in a lower portion of the hot water storage tank 8 is connected to the first supply water piping 9a via a third supply water piping 9c. A decompression valve 31 is provided at a position partway along the third supply water piping 9c. Supply water introduced from the first supply water piping 9a to the third supply water piping 9c is subjected to pressure adjustment by the decompression valve 31 so as to have a prescribed pressure and then flows into the hot water storage tank 8.

An end of a water outlet piping 10 is connected to a water outlet 8b provided in the lower portion of the hot water storage tank 8. Another end of the water outlet 8b is connected to the suction side of a heat source pump 12. The discharge side of the heat source pump 12 is connected to the entrance side of the HP unit 7 via the HP going piping 14. Also, the tank unit 33 incorporates a three-way valve 18 therein. The three-way valve 18 is flow path switching means including a port a via which water flows in, ports b and c via which water flows out. The port a of the three-way valve 18 is connected to the exit side of the HP unit 7 via the HP return piping 15. The port b of the three-way valve 18 is connected to a hot water inlet 8d provided in an upper portion of the hot water storage tank 8 via a hot water feeding piping 13. The port c of the three-way valve 18 is connected to a hot water inlet 8c provided between a center portion and the lower portion of the hot water storage tank 8 via a bypass piping 16.

The hot water storage tank 8 allows high-temperature hot water heated using the HP unit 7 to flow thereinto from the hot water inlet 8d through the HP return piping 15 and the hot water feeding piping 13 and also allows low-temperature water to flow thereinto from the water inlet 8a through the third supply water piping 9c. Consequently, in the hot water storage tank 8, water is stored so as to cause a temperature difference between the upper and lower portions. A plurality of stored hot water temperature sensors are attached to respective positions that are different in height from each other on a surface of the hot water storage tank 8. More specifically, a stored hot water temperature sensor 42 is attached to an upper portion of the surface of the hot water storage tank 8, and a stored hot water temperature sensor 43 is attached to a lower portion of the surface of the hot water storage tank 8. An amount of residual hot water in the hot water storage tank 8 is recognized by detecting a temperature distribution of water in the hot water storage tank 8 via the stored hot water temperature sensors 42 and 43. The control section 36 controls, e.g., start and stop of an operation of heating up water in the hot water storage tank 8 via the HP unit 7, based on the detected residual hot water amount.

The tank unit 33 incorporates a hot water supply heat exchanger 52 therein. A secondary-side entrance of the hot water supply heat exchanger 52 is connected to the first supply water piping 9a via the second supply water piping 9b. A secondary-side exit of the hot water supply heat exchanger 52 is connected to a hot water tap 34 via a hot supply water piping 21. In the below description, a conduit that guides supply water from the water source to the hot water tap 34 via the first supply water piping 9a, the second supply water piping 9b, the hot water supply heat exchanger 52 and the hot supply water piping 21 is referred to as "supply water conduit 9", and the supply water flowing in the supply water conduit 9 is referred to as "supply water". Also, at a position partway along the second supply water piping 9b, a hot water supply flow rate sensor 49 for detecting a hot water supply-side flow rate Fk, which is a flow rate of supply water flowing in the supply water conduit 9 is disposed.

Also, a primary-side entrance of the hot water supply heat exchanger 52 is connected to a hot water outlet 8e provided in the upper portion of the hot water storage tank 8 via a heat source inlet piping 46a. Also, a primary-side exit of the hot water supply heat exchanger 52 is connected to a hot water inlet 8f provided in the lower portion of the hot water storage tank 8 via a heat source outlet piping 46b. In the below description, a conduit that returns water guided out of the hot water outlet 8e of the hot water storage tank 8 to the inside of the hot water storage tank 8 via the hot water inlet 8f through the heat source inlet piping 46a, the hot water supply heat exchanger 52 and the heat source outlet piping 46b is referred to as "hot water supply heat source conduit 46". Also, at a position partway along the heat source outlet piping 46b, a hot water supply heat source pump 48 for circulating hot water in the hot water supply heat source conduit 46 is disposed. The hot water supply heat source pump 48 is configured so that an output is adjusted by an input voltage Vp. Furthermore, at a position partway of the heat source outlet piping 46b, a hot water supply heat source flow rate sensor 50 for detecting a heat source-side flow rate Fl, which is a flow rate of water flowing in the hot water supply heat source conduit 46, is disposed. High-temperature hot water running out from the hot water tap 34 is supplied to a combination tap 51 of, e.g., a faucet, which is a hot water supply terminal, and then mixed with low-temperature tap water and used by a user.

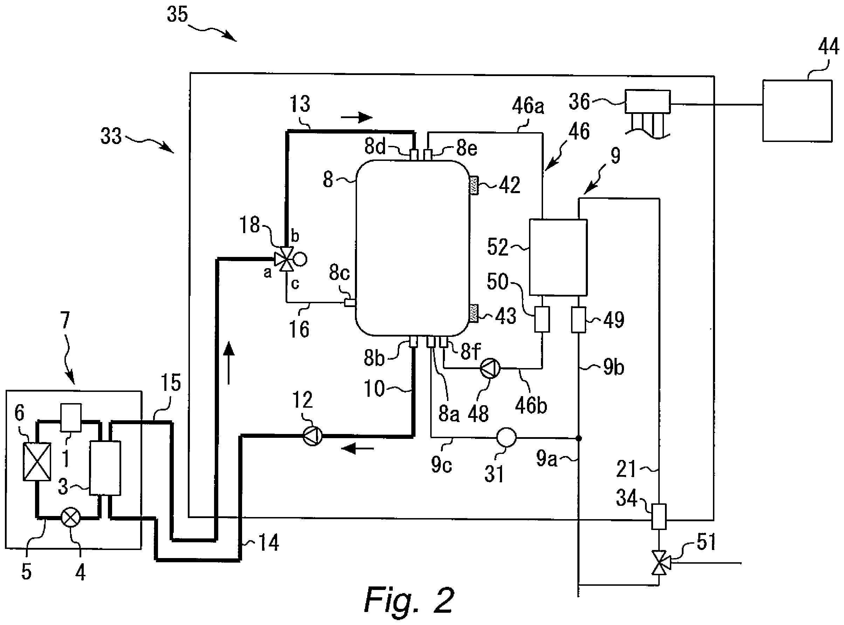

Next, operation of the storage water heater according to the present embodiment will be described. Fig. 2 is a circuit configuration diagram of the storage water heater according to Embodiment 1 of the present invention in a heating-up operation. A heating-up operation here refers to an operation of storing hot water resulting of heating-up using the HP unit 7 in the hot water storage tank 8. In this heating-up operation, the three-way valve 18 is controlled so as to bring the port a and the port b into communication with each other and the port c into a closed state. Consequently, the HP return piping 15 and the hot water feeding piping 13 come into communication with each other, and the bypass piping 16 side is closed and a flow path to the hot water inlet 8c of the hot water storage tank 8 is blocked.

A heating-up operation is executed by starting operation of the heat source pump 12 and the HP unit 7 with the three-way valve 18 configured as described above. As a result, low-temperature water flowing out from the water outlet 8b of the hot water storage tank 8 is guided to the HP unit 7 via the water outlet piping 10, the heat source pump 12 and the HP going piping 14, and is heated in the water-refrigerant heat exchanger 3 and thereby turns into high-temperature hot water and then flows into the hot water storage tank 8 from the hot water inlet 8d of the hot water storage tank 8 via the HP return piping 15, the three-way valve 18 and the hot water feeding piping 13. As a result of the execution of such heating-up operation, inside the hot water storage tank 8, high-temperature hot water is accumulated in an upper tier portion and the tier of the high-temperature hot water thus gradually thickens.

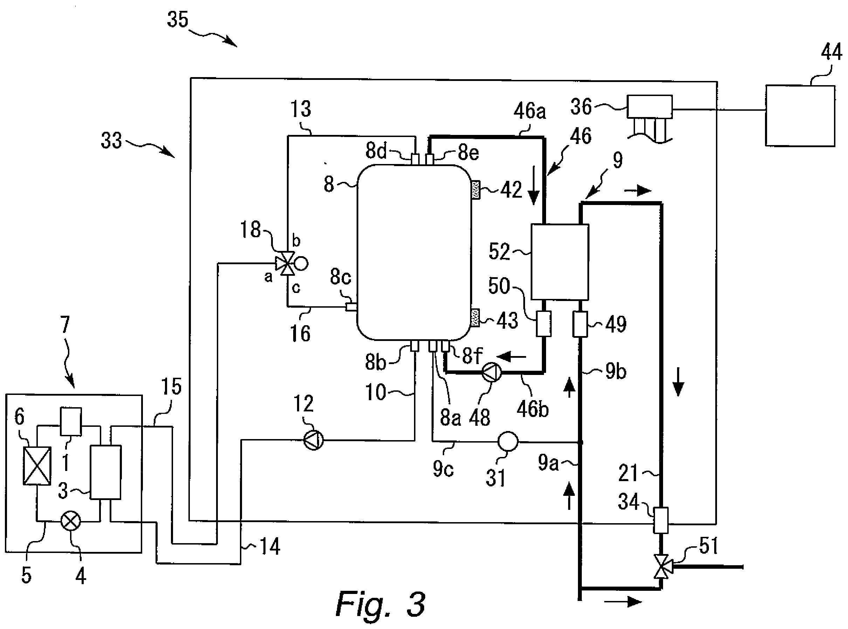

Also, in the storage water heater according to the present embodiment, a hot water supply operation of heating supply water supplied from the water source using high-temperature water stored in the hot water storage tank 8 as a result of the above-described heating-up operation is performed. Fig. 3 is a circuit configuration diagram of the storage water heater according to Embodiment 1 of the present invention in a hot water supply operation. A hot water supply operation is executed by starting operation of the hot water supply heat source pump 48 in response to opening of, e.g., the faucet. As a result, the high-temperature water stored in the upper portion of the hot water storage tank 8 is introduced to the primary side of the hot water supply heat exchanger 52 from the hot water outlet 8e via the heat source inlet piping 46a. Here, low-temperature water flowing in the second supply water piping 9b is introduced to the secondary side of the hot water supply heat exchanger 52. The introduced low-temperature water is heated by heat exchange with the high-temperature water on the primary side in the hot water supply heat exchanger 52 and thereby turns into high-temperature hot water. The supply water after turning into high-temperature hot water is supplied to the hot water tap 34 through the hot supply water piping 21. As a result of the execution of such hot water supply operation, hot water successively runs out from the combination tap 51 of, e.g., the faucet.

Here, upon start of hot water supply operation in the storage water heater according to the present embodiment, the control section 36 activates target value setting means for setting a target flow rate Ftgt for a heat source-side flow rate Fl, which is a flow rate on the primary side of the hot water supply heat exchanger 52, based on a hot water supply-side flow rate Fk detected by the hot water supply flow rate sensor 49 (that is, a flow rate on the secondary side of the hot water supply heat exchanger 52). The target flow rate Ftgt is a flow rate on the primary side of the hot water supply heat exchanger 52 for bringing a temperature of high-temperature hot water guided out of the secondary side of the hot water supply heat exchanger 52 to a set temperature, and is set so that, for example, the target flow rate Ftgt = hot water supply-side flow rate Fk. Then, the control section 36 activates pump control means for performing feedback control of an output of the hot water supply heat source pump 48 so as to bring the heat source-side flow rate Fl detected by the hot water supply heat source flow rate sensor 50 to the target flow rate Ftgt.

In the feedback control, for example, the input voltage Vp of the hot water supply heat source pump 48 is controlled by PID (proportional-integral-derivative) control indicated by Expression (1) below.

$$Vp = Kp \times (\Delta F(i) - \Delta F(i-1)) + Ki \times \Delta F(i) + Kd \times (\Delta F(i) - 2 \times \Delta F(i-1) + \Delta F(i-2)) \ ... \ (1)$$

$$\Delta F = Ftgt - Fl$$

$$Ftgt = Fk$$

In Expression (1) above, Kp is a proportional gain, Ki is an integral gain, Kd is a derivative gain, $\Delta F(i)$ is current $\Delta F$, $\Delta F(i-1)$ is $\Delta F$ in a control interval in last time, and $\Delta F(i-1)$ is $\Delta F$ in a control interval two times ago. According to PID control indicated in Expression (1) above, an input voltage Vp for bringing the heat source-side flow rate Fl close to the target flow rate Ftgt (= Fk) is calculated for each control interval $\Delta Tc$.

Here, in the PID control above, if the hot water supply-side flow rate Fk is stable, it is preferable to set the control interval $\Delta Tc$ to be long to a certain extent so as to prevent unnecessary fluctuation in hot water supply temperature. On the other hand, if the hot water supply-side flow rate Fk rapidly fluctuates, it is preferable to set the control interval $\Delta Tc$ to be short in order to make the heat source-side flow rate Fl promptly follow the rapid fluctuation and thereby reduce or eliminate a difference in hot water supply temperature.

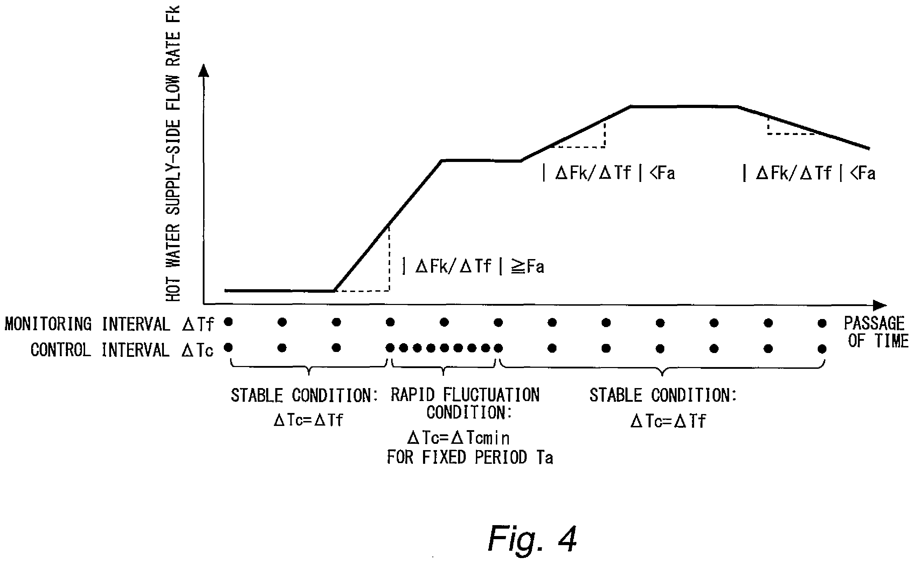

Therefore, in the storage water heater according to the present embodiment, the control interval $\Delta Tc$ is variably set according to a degree of stability of the hot water supply-side flow rate Fk. Fig. 4 is a graph indicating variation of the hot water supply-side flow rate Fk relative to passage of time in the storage water heater according to Embodiment 1 of the present invention. As illustrated in this graph, in the storage water heater according to the present embodiment, first, the hot water supply-side flow rate Fk is detected for each monitoring interval $\Delta Tf$. Then, as an index representing a stability degree of the hot water supply-side flow rate Fk, an absolute value of an amount of temporal change in hot water supply-side flow rate Fk is calculated for each monitoring interval $\Delta Tf$ according to Expression (2) below.

$$\text{Stability degree} = |\Delta Fk / \Delta Tf| \ ... \ (2)$$

$$\Delta Fk = Fk(i) - Fk(i-1)$$

The stability degree defined by Expression (2) above has a larger value as the hot water supply-side flow rate more rapidly fluctuates. Therefore, the control section 36 determines that the hot water supply-side flow rate Fk rapidly fluctuates if it is determined that $|\Delta Fk / \Delta Tf| \geq$ a constant Fa, and activates control interval changing means for changing

the control interval $\Delta Tc$ of PID control to be shorter than that in a stable condition. More specifically, when the hot water supply-side flow rate is stable, that is, when it is not determined that $|\Delta Fk/\Delta Tf| \geq$ the constant Fa, the control interval $\Delta Tc$ = the monitoring interval $\Delta Tf$ (first control interval), and upon transition from the stable condition to a rapid fluctuation condition as a result of it being determined that $|\Delta Fk/\Delta Tf| \geq$ the constant Fa, the control interval $\Delta Tc$ is set to a control interval $\Delta Tcmin$ (second control interval), which is shorter than the monitoring interval $\Delta Tf$. The constant Fa is a threshold value of a stability degree for determining that the hot water supply-side flow rate Fk is stable or rapidly fluctuates, and for the constant Fa, a preset constant is used. Such control enables suppression of hunting when the hot water supply-side flow rate is stable and thereby enables prevention of unnecessary fluctuation of hot water supply temperature, and also enables enhancement in control responsiveness when the hot water supply-side flow rate rapidly fluctuates and thus reduction or elimination of a difference in hot water supply temperature.

When the control interval $\Delta Tc$ is set to $\Delta Tcmin$ in response to transition of the hot water supply-side flow rate from a stable condition to a rapid fluctuation condition, a rapid fluctuation period Ta is provided to prevent frequent switching between stable condition and rapid fluctuation condition, and during a fixed period from the transition to the rapid fluctuation condition until an elapse of the rapid fluctuation period Ta, PID control for a rapid fluctuation condition is maintained. Consequently, complicated switching of the control interval $\Delta Tc$ is prevented, enabling ensuring hot water supply temperature stability.

Also, when the hot water supply-side flow rate rapidly fluctuates, gain changing means for changing each gain of PID control to a second gain that is larger than a first gain for a stable condition is activated, enabling further control responsiveness enhancement. For example, when the hot water supply-side flow rate is stable, coefficients for PID control are: $Kp = 1$, $Ki = 0.001$, $Kp = 0.01$, $\Delta Tf = 1$ second and $\Delta Tc = 1$ second ($= \Delta Tf$), and when the hot water supply-side flow rate rapidly fluctuates, the coefficients are: $Kp = 2$, $Ki = 0.002$, $Kp = 0.02$, $\Delta Tf = 1$ second, $\Delta Tf = 0.5$ second and $Ta = 2$ seconds. Consequently, PID control that is highly responsive to fluctuation of the hot water supply-side flow rate can be performed.

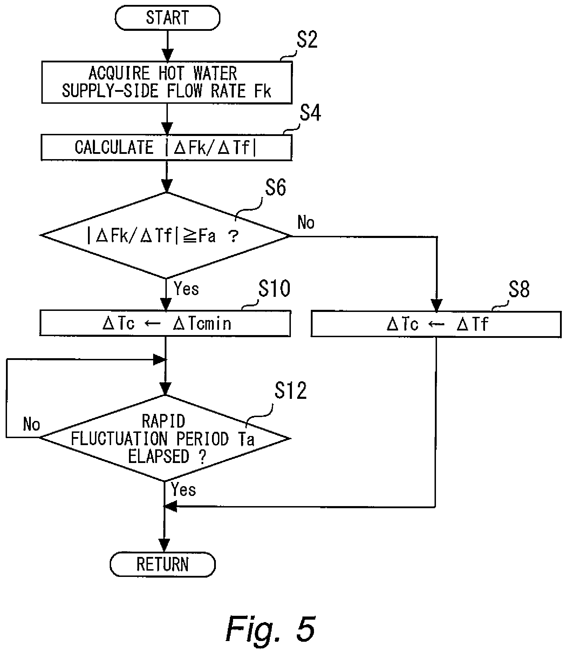

Next, specific processing in a hot water supply operation in a storage water heater according to an embodiment of the present invention will be described in detail with reference to a flowchart. Fig. 5 is a flowchart of a routine for the control section 36 to set a control interval $\Delta Tc$ in Embodiment 1 of the present invention. The routine illustrated in Fig. 5 is executed for each monitoring interval $\Delta Tf$.

In the routine illustrated in Fig. 5, first, a hot water supply-side flow rate Fk is acquired by the hot water supply flow rate sensor 49 (step S2). Next, $|\Delta Fk/\Delta Tf|$, which is an absolute value of an amount of temporal change in the hot water supply-side flow rate Fk is calculated (step S4). Here, more specifically, $|\Delta Fk/\Delta Tf|$ is calculated by substituting a hot water supply-side flow rate Fk(i) in the present routine and a hot water supply-side flow rate Fk (i-1) in the last routine into Expression (2) above.

Next, whether or not $|\Delta Fk/\Delta Tf| \geq$ Fa is determined (step S6). As a result, if it is not determined that $|\Delta Fk/\Delta Tf| \geq$ Fa, it is determined that the hot water supply-side flow rate Fk is stable, and the routine proceeds to the next step, and a control interval $\Delta Tc$ in PID control of a heat source-side flow rate Fl is set to be equal to the monitoring interval $\Delta Tf$ (step S8). On the other hand, if it is determined in step S6 that $|\Delta Fk/\Delta Tf| \geq$ Fa, it is determined the hot water supply-side flow rate Fk rapidly fluctuates, and the routine proceeds to next step and the control interval $\Delta Tc$ in the PID control of the heat source-side flow rate Fl is set to a control interval $\Delta Tcmin$, which is shorter than the monitoring interval $\Delta Tf$ (step S10). Next, whether or not the rapid fluctuation period Ta has elapsed is determined (step S12). As a result, if the rapid fluctuation period Ta has not yet elapsed, the processing in step S12 is repeated until an elapse of the rapid fluctuation period Ta. After the above processing in step S8, or if it is determined in step S12 above that the rapid fluctuation period Ta has elapsed, the present routine ends, and the routine illustrated in Fig. 5 is executed again from the beginning.

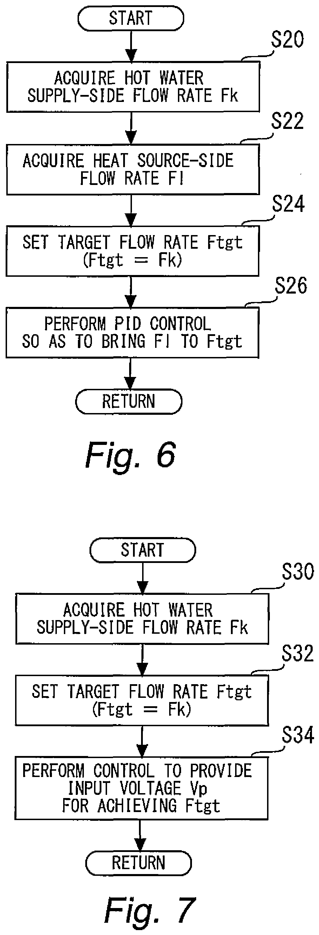

Fig. 6 is a flowchart of a routine for the control section 36 to perform control of a heat source-side flow rate in Embodiment 1 of the present invention. Here, the routine illustrated in Fig. 6 is repeated for each control interval $\Delta Tc$ set in the routine illustrated in Fig. 5.

In the routine illustrated in Fig. 6, first, a hot water supply-side flow rate Fk is acquired by the hot water supply flow rate sensor 49 (step S20). Next, a heat source-side flow rate Fl is acquired by the hot water supply heat source flow rate sensor 50 (step S22). Next, a target flow rate Ftgt for the heat source-side flow rate is set (step S24). Here, the target flow rate Ftgt is set to be equal to the hot water supply-side flow rate Fk acquired in step S20 above. Next, an input voltage Vp of the hot water supply heat source pump 48 is subjected to PID control using Expression (1) above so as to bring the heat source-side flow rate Fl acquired in step S22 above to the target flow rate Ftgt set in step S24 above (step S26).

As described above, the storage water heater according to the present embodiment enables enhancement in flow rate responsiveness to rapid fluctuation even if there is fluctuation in hot water supply-side flow rate and also enables suppression of unnecessary flow rate fluctuation when the flow rate is stable. Consequently, a tapping temperature can be stabilized, enabling a hot water supply operation without giving a feeling discomfort to a user.

Although in the storage water heater according to the above-described embodiment, PID control of the heat source-side flow rate Fl is performed, other feedback control that controls an input voltage Vp of the hot water supply heat source pump 48 so as to bring the heat source-side flow rate Fl to the target flow rate Ftgt may be used.

Also, although in the storage water heater according to the above-described embodiment, during the rapid fluctuation period Ta after setting the control interval ΔTc to ΔTcmin, the control interval ΔTc is maintained at ΔTcmin, such control is not necessarily essential in the present invention. Also, in the PID control of the heat source-side flow rate Fl, when the hot water supply-side flow rate Fk rapidly fluctuates, gains are made to be large compared to those when the hot water supply-side flow rate Fk is stable, such control is not necessarily essential in the present invention. Also, the intended gains are not limited to all of the proportional gain Kp, the integral gain Ki and the derivative gain Kd, and may be any of these gains.

Embodiment 2

Next, Embodiment 2 of the present invention will be described. A storage water heater according to Embodiment 2 can be provided by making a control section 36 execute the routine illustrated in Fig. 5 and a routine illustrated in Fig. 7, which will be described later, using the hardware configuration illustrated in Fig. 1.

In the above-described storage water heater according to Embodiment 1, a heat source-side flow rate Fl is detected by the hot water supply heat source flow rate sensor 50 and an input voltage Vp of the hot water supply heat source pump 48 is subjected to feedback control so as to bring the detected heat source-side flow rate Fl to a target flow rate Ftgt.

Here, a configuration of the hot water supply heat source conduit 46 does not change during a hot water supply operation. Thus, a heat source-side flow rate Fl relative to an input voltage Vp of the hot water supply heat source pump 48 is uniquely determined. More specifically, for example, where Fl = 0 L/min if Vp = 0V, Fl = 2 L/min if Vp = IV and Fl = 4 L/min if Vp = 2V because of characteristics of the hot water supply heat source pump 48 and the configuration of the hot water supply heat source conduit 46, a relationship between the input voltage Vp of the hot water supply heat source pump 48 and the heat source-side flow rate Fl can be mapped by means of linear interpolation of Fl for other input voltages Vp.

Therefore, in the storage water heater according to the present embodiment, an input voltage Vp of a hot water supply heat source pump 48, the input voltage Vp providing the target flow rate Ftgt = the heat source-side flow rate Fl, is calculated by feed forward control. Consequently, even a hardware configuration including no hot water supply heat source flow rate sensor 50 enables control of a heat source-side flow rate Fl to be a target flow rate Ftgt.

Next, specific processing for a hot water supply operation in a storage water heater according to an embodiment of the present invention will be described in detail with reference to a flowchart. Fig. 7 is a flowchart of a routine for the control section 36 to perform control of a heat source-side flow rate in Embodiment 2 of the present invention. Here, in the routine illustrated in Fig. 7 is repeated for each control interval ΔTc set in the routine illustrated in Fig. 5.

In the routine illustrated in Fig. 7, first, a hot water supply-side flow rate Fk is acquired by a hot water supply flow rate sensor 49 (step S30). Next, a target flow rate Ftgt for the heat source-side flow rate is set (step S32). Here, the target flow rate Ftgt is set to be equal to the hot water supply-side flow rate Fk acquired in step S20 above.

Next, using the map prescribing the relationship between the input voltage Vp and the heat source-side flow rate Fl, an input voltage Vp for achieving the target flow rate Ftgt set in step S32 above is identified. Then, the input voltage Vp of the hot water supply heat source pump 48 is controlled to be the identified input voltage Vp (step S34).

As described above, the storage water heater according to the present embodiment enables, even when there is fluctuation in a hot water supply-side flow rate, enhancement in flow rate responsiveness in a rapid fluctuation condition and also enables suppression in unnecessary flow rate fluctuation when the flow rate is stable. Consequently, a tapping temperature can be stabilized, enabling a hot water supply operation without giving a feeling of discomfort to a user. Also, the storage water heater according to the present embodiment enables control of a heat source-side flow rate Fl to be a target flow rate Ftgt even with a hardware configuration including no hot water supply heat source flow rate sensor 50.

Reference Signs List

    1 compressor
    3 water-refrigerant heat exchanger
    4 expansion valve
    5 refrigerant circulation piping
    6 air heat exchanger
    7 HP unit (heating means)

8 hot water storage tank
8a water inlet
8b water outlet
8c hot water inlet
8d hot water inlet
8e hot water outlet
8f hot water inlet
9 supply water conduit
9a first supply water piping
9b second supply water piping
9c third supply water piping
10 water outlet piping
12 heat source pump
13 hot water feeding piping
14 HP going piping
15 HP return piping
16 bypass piping
21 hot supply water piping
31 decompression valve
33 tank unit
34 hot water tap
35 storage water heater
36 control section
42, 43 stored hot water temperature sensors
44 remote controller device
46 hot water supply heat source conduit
46a heat source inlet piping
46b heat source outlet piping
48 hot water supply heat source pump
49 hot water supply flow rate sensor
50 hot water supply heat source flow rate sensor
51 combination tap
52 hot water supply heat exchanger

**Claims**

1.  A storage water heater (35) comprising:

    a hot water storage tank (8) that stores hot water;
    heating means (7) for heating hot water stored in the hot water storage tank (8);
    a hot water supply heat exchanger (52) for performing heat exchange between hot water supplied from an upper portion of the hot water storage tank (8) and supply water;
    a supply water conduit (9) that guides the supply water to a hot water supply terminal (51) via the hot water supply heat exchanger (52);
    a hot water supply heat source conduit (46) that guides water from the upper portion of the hot water storage tank (8) to a lower portion of the hot water storage tank (8) via the hot water supply heat exchanger (52);
    a hot water supply heat source pump (48) that circulates water in the hot water supply heat source conduit (46); and
    pump control means (36) for, in a hot water supply operation of supplying hot water to the hot water supply terminal (51), calculating an output of the hot water supply heat source pump (48), the output bringing a heat source-side flow rate that is a flow rate of hot water flowing in the hot water supply heat source conduit (46) to a target flow rate, for each control interval and controlling the hot water supply heat source pump (48) based on the calculated output,
    wherein the pump control means (36) includes control interval changing means for changing the control interval based on an amount of temporal change in a hot water supply-side flow rate that is a flow rate of supply water flowing in the supply water conduit (9),
    **characterized in that** if the amount of temporal change in the hot water supply-side flow rate exceeds a threshold value, the control interval changing means changes the control interval from a first control interval to a second control interval that is shorter than the first control interval.

2. The storage water heater (35) according to claim 1, wherein if the control interval is changed from the first control interval to the second control interval, the control interval changing means maintains the control interval at the second control interval for a fixed period of time after the change.

3. The storage water heater (35) according to claim 1 or 2, further comprising a hot water supply heat source flow rate sensor (50) that detects the heat source-side flow rate,
wherein the pump control means (36) includes feedback control means for subjecting the output of the hot water supply heat source pump (48) to feedback control so that the heat source-side flow rate detected by the hot water supply heat source flow rate sensor (50) reaches the target flow rate.

4. The storage water heater (35) according to claim 3, wherein the pump control means (36) includes gain changing means for, if the absolute value exceeds a threshold value, changing a gain of the feedback control from a first gain to a second gain that is larger than the first gain.

5. The storage water heater (35) according to any one of claims 1 to 4, comprising a hot water supply flow rate sensor that detects a hot water supply-side flow rate that is a flow rate of hot water flowing in the supply water conduit (9), wherein
the pump control means (36) includes target value setting means for setting the target flow rate based on the hot water supply-side flow rate.

6. The storage water heater (35) according to any one of claims 1 to 5, wherein the pump control means (36) includes calculation means for calculating the amount of temporal change in the hot water supply-side flow rate for each monitoring interval.

**Patentansprüche**

1. Speicher-Wassererwärmer (35), umfassend:

einen Warmwasserspeichertank (8), der Warmwasser speichert;
Heizmittel (7) zum Erwärmen von im Warmwasserspeichertank (8) gespeichertem Warmwasser;
einen Warmwasserversorgungswärmetauscher (52) zum Durchführen von Wärmeaustausch zwischen Warmwasser, das von einem oberen Abschnitt des Warmwasserspeichertanks (8) geliefert wird, und Versorgungswasser;
eine Versorgungswasserleitung (9), die das Versorgungswasser über den Warmwasserversorgungswärmetauscher (52) zu einem Warmwasserversorgungsanschluss (51) leitet;
eine Warmwasserversorgungs-Wärmequellenleitung (46), die Wasser über den Warmwasserversorgungswärmetauscher (52) von dem oberen Abschnitt des Warmwasserspeichertanks (8) zu einem unteren Abschnitt des Warmwasserspeichertanks (8) führt;
eine Warmwasserversorgungs-Wärmequellenpumpe (48), die Wasser in der Warmwasserversorgungs-Wärmequellenleitung (46) zirkuliert; und
Pumpensteuermittel (36) zum Berechnen einer Fördermenge der Warmwasserversorgungs-Wärmequellenpumpe (48) in einem Warmwasserversorgungsbetrieb, in dem Warmwasser an den Warmwasserversorgungsanschluss (51) geliefert wird, wobei die Fördermenge eine wärmequellenseitige Durchflussmenge, die eine Durchflussmenge von in der Warmwasserversorgungs-Wärmequellenleitung (46) strömenden Warmasser ist, für jedes Steuerintervall auf eine Soll-Durchflussmenge bringt und die Warmwasserversorgungs-Wärmequellenpumpe (48) auf Grundlage des berechneten Durchsatzes steuert,
wobei die Pumpensteuereinrichtung (36) ein Steuerintervalländerungsmittel zum Ändern des Steuerintervalls auf Grundlage eines Betrags einer zeitlichen Änderung einer warmwasserversorgungsseitigen Durchflussmenge, die eine Durchflussmenge von in der Versorgungswasserleitung (9) strömendem Versorgungswasser ist, umfasst,
**dadurch gekennzeichnet, dass**, wenn der Umfang der zeitlichen Änderung der warmwasserversorgungseitigen Durchflussmenge einen Schwellenwert überschreitet, das Steuerintervalländerungsmittel das Steuerintervall von einem ersten Steuerintervall in ein zweites Steuerintervall, das kürzer ist als das erste Steuerintervall, ändert.

**2.** Speicher-Wassererwärmer (35) nach Anspruch 1, wobei, wenn das Steuerintervall von dem ersten Steuerintervall in das zweite Steuerintervall geändert wird, das Steuerintervalländerungsmittel das Steuerintervall für einen bestimmten Zeitraum nach der Änderung auf dem zweiten Steuerintervall aufrechthält.

**3.** Speicher-Wassererwärmer (35) nach Anspruch 1 oder 2, ferner umfassend einen Warmwasserversorgungs-Wärmequellen-Durchflusssensor (50), der den wärmequellenseitigen Durchfluss erfasst,
wobei die Pumpensteuereinrichtung (36) ein Regelungsmittel umfasst, um die Fördermenge der Warmwasserversorgungswärmequellenpumpe (48) einer Regelung zu unterziehen, so dass der vom Warmwasserversorgungs-Wärmequellen-Durchflusssensor (50) erfasste wärmequellenseitige Durchfluss die Soll-Durchflussmenge erreicht.

**4.** Speicher-Wassererwärmer (35) nach Anspruch 3, wobei die Pumpensteuereinrichtung (36) ein Verstärkungsänderungsmittel beinhaltet, um, wenn der absolute Wert einen Schwellenwert überschreitet, eine Verstärkung der Regelung von einer ersten Verstärkung auf eine zweite Verstärkung, die größer ist als die erste Verstärkung, zu ändern.

**5.** Speicher-Wassererwärmer (35) nach einem der Ansprüche 1 bis 4, umfassend einen Warmwasserversorgungs-Durchflusssensor, der eine warmwasserversorgungsseitige Durchflussmenge erfasst, die eine Durchflussmenge von Warmwasser ist, das in der Versorgungswasserleitung (9) strömt, wobei
die Pumpensteuereinrichtung (36) ein Sollwerteinstellmittel zum Einstellen der Soll-Durchflussmenge auf Grundlage der warmwasserversorgungsseitigen Durchflussmenge umfasst.

**6.** Speicher-Wassererwärmer (35) nach einem der Ansprüche 1 bis 5, wobei die Pumpensteuereinrichtung (36) ein Berechnungsmittel zum Berechnen des Betrags der zeitlichen Änderung der warmwasserversorgungsseitigen Durchflussmenge für jedes Überwachungsintervall umfasst.

## Revendications

**1.** Chauffe-eau à accumulation (35) comprenant :

un accumulateur d'eau chaude (8) qui accumule de l'eau chaude ;
des moyens de chauffage (7) pour chauffer l'eau chaude accumulée dans l'accumulateur d'eau chaude (8) ;
un échangeur de chaleur d'alimentation en eau chaude (52) pour effectuer un échange de chaleur entre l'eau chaude fournie à partir d'une partie supérieure de l'accumulateur d'eau chaude (8) et l'eau d'alimentation ;
une conduite d'eau d'alimentation (9) qui guide l'eau d'alimentation vers un terminal d'alimentation en eau chaude (51) par l'intermédiaire de l'échangeur de chaleur d'alimentation en eau chaude (52) ;
une conduite de source de chaleur d'alimentation en eau chaude (46) qui guide l'eau de la partie supérieure de l'accumulateur d'eau chaude (8) vers une partie inférieure de l'accumulateur d'eau chaude (8) par l'intermédiaire de l'échangeur de chaleur d'alimentation en eau chaude (52) ;
une pompe de source de chaleur d'alimentation en eau chaude (48) qui fait circuler l'eau dans la conduite de source de chaleur d'alimentation en eau chaude (46) ; et
des moyens de commande de pompe (36) pour, dans une opération d'alimentation en eau chaude pour alimenter en eau chaude le terminal d'alimentation en eau chaude (51), calculer une sortie de la pompe de source de chaleur d'alimentation en eau chaude (48), la sortie amenant un débit côté source de chaleur qui est un débit de l'eau chaude s'écoulant dans la conduite de source de chaleur d'alimentation en eau chaude (46) à un débit cible, pour chaque intervalle de commande et commander la pompe de source de chaleur d'alimentation en eau chaude (48) sur la base de la sortie calculée,
dans lequel les moyens de commande de pompe (36) comprennent des moyens de changement d'intervalle de commande pour changer l'intervalle de commande sur la base d'une quantité de changement temporel d'un débit côté alimentation en eau chaude qui est un débit de l'eau d'alimentation s'écoulant dans la conduite d'eau d'alimentation (9),
**caractérisé en ce que**, si la quantité de changement temporel du débit côté alimentation en eau chaude dépasse une valeur de seuil, les moyens de changement d'intervalle de commande changent l'intervalle de commande d'un premier intervalle de commande à un deuxième intervalle de commande qui est plus court que le premier intervalle de commande.

**2.** Chauffe-eau à accumulation (35) selon la revendication 1, dans lequel, si l'intervalle de commande est changé du premier intervalle de commande au deuxième intervalle de commande, les moyens de changement d'intervalle de commande maintiennent l'intervalle de commande au deuxième intervalle de commande pendant une période de temps fixée après le changement.

3. Chauffe-eau à accumulation (35) selon la revendication 1 ou 2, comprenant en outre un capteur de débit de source de chaleur d'alimentation en eau chaude (50) qui détecte le débit côté source de chaleur, dans lequel les moyens de commande de pompe (36) comprennent des moyens de commande à rétroaction pour soumettre la sortie de la pompe de source de chaleur d'alimentation en eau chaude (48) à une commande à rétroaction de sorte que le débit côté source de chaleur détecté par le capteur de débit de source de chaleur d'alimentation en eau chaude (50) atteigne le débit cible.

4. Chauffe-eau à accumulation (35) selon la revendication 3, dans lequel les moyens de commande de pompe (36) comprennent des moyens de changement de gain pour, si la valeur absolue dépasse une valeur de seuil, changer un gain de la commande à rétroaction d'un premier gain à un deuxième gain qui est supérieur au premier gain.

5. Chauffe-eau à accumulation (35) selon l'une quelconque des revendications 1 à 4, comprenant un capteur de débit d'alimentation en eau chaude qui détecte un débit côté alimentation en eau chaude qui est un débit de l'eau chaude s'écoulant dans la conduite d'eau d'alimentation (9), dans lequel les moyens de commande de pompe (36) comprennent des moyens d'établissement de valeur cible pour établir le débit cible sur la base du débit côté alimentation en eau chaude.

6. Chauffe-eau à accumulation (35) selon l'une quelconque des revendications 1 à 5, dans lequel les moyens de commande de pompe (36) comprennent des moyens de calcul pour calculer la quantité de changement temporel du débit côté alimentation en eau chaude pour chaque intervalle de surveillance.

*Fig. 1*

*Fig. 2*

*Fig. 3*

EP 3 147 583 B1

$| \Delta Fk / \Delta Tf | < Fa$

$| \Delta Fk / \Delta Tf | < Fa$

$| \Delta Fk / \Delta Tf | \geqq Fa$

HOT WATER SUPPLY-SIDE FLOW RATE Fk

MONITORING INTERVAL $\Delta Tf$

CONTROL INTERVAL $\Delta Tc$

PASSAGE OF TIME

STABLE CONDITION:
$\Delta Tc = \Delta Tf$

RAPID FLUCTUATION CONDITION:

$\Delta Tc = \Delta Tcmin$
FOR FIXED PERIOD Ta

STABLE CONDITION:
$\Delta Tc = \Delta Tf$

*Fig. 4*

START

ACQUIRE HOT WATER
SUPPLY-SIDE FLOW RATE Fk
$S2$

CALCULATE $|\Delta Fk/\Delta Tf|$
$S4$

$|\Delta Fk/\Delta Tf| \geqq Fa$ ? $S6$ —— No

Yes $S10$

$\Delta Tc \leftarrow \Delta Tcmin$

$S8$

$\Delta Tc \leftarrow \Delta Tf$

RAPID
FLUCTUATION PERIOD Ta
ELAPSED ? $S12$ —— No

Yes

RETURN

*Fig. 5*

16

```
        ┌─────────┐
        │  START  │
        └────┬────┘
             │                          S20
  ┌──────────▼──────────────┐
  │   ACQUIRE HOT WATER      │
  │ SUPPLY-SIDE FLOW RATE Fk │
  └──────────┬──────────────┘
             │                          S22
  ┌──────────▼──────────────┐
  │  ACQUIRE HEAT SOURCE-SIDE│
  │      FLOW RATE Fl        │
  └──────────┬──────────────┘
             │                          S24
  ┌──────────▼──────────────┐
  │  SET TARGET FLOW RATE Ftgt│
  │       (Ftgt = Fk)        │
  └──────────┬──────────────┘
             │                          S26
  ┌──────────▼──────────────┐
  │   PERFORM PID CONTROL    │
  │ SO AS TO BRING Fl TO Ftgt│
  └──────────┬──────────────┘
             │
        ┌────▼────┐
        │ RETURN  │
        └─────────┘
```

## Fig. 6

```
        ┌─────────┐
        │  START  │
        └────┬────┘
             │                          S30
  ┌──────────▼──────────────┐
  │   ACQUIRE HOT WATER      │
  │ SUPPLY-SIDE FLOW RATE Fk │
  └──────────┬──────────────┘
             │                          S32
  ┌──────────▼──────────────┐
  │  SET TARGET FLOW RATE Ftgt│
  │       (Ftgt = Fk)        │
  └──────────┬──────────────┘
             │                          S34
  ┌──────────▼──────────────┐
  │ PERFORM CONTROL TO PROVIDE│
  │     INPUT VOLTAGE Vp      │
  │    FOR ACHIEVING Ftgt     │
  └──────────┬──────────────┘
             │
        ┌────▼────┐
        │ RETURN  │
        └─────────┘
```

## Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5099507 A

- JP 2002122352 A